# EUROPEAN PATENT APPLICATION

(11) **EP 2 914 011 A1**
(43) Date of publication of application: **02.09.2015**
(21) Application number: 13850433.7
(22) Date of filing: 10.09.2013
(51) Int. Cl.: H04N 21/41

(54) **MEDIA PLAYING METHOD AND DEVICE**

(30) Priority: 29.10.2012 CN 201210419726
(71) Applicant: ZTE Corporation, Shenzhen, Guangdong 518057 (CN)
(72) Inventor: JIANG, Zhongyang, Shenzhen Guangdong 518057 (CN); QIAN, Zhongshan, Shenzhen Guangdong 518057 (CN); CHEN, Jun, Shenzhen Guangdong 518057 (CN)
(74) Representative: D'Halleweyn, Nele Veerle Trees Gertrudis
(86) International application number: PCT/CN2013/083223
(87) International publication number: WO 2014/067348

(57) **Abstract**

A method and a device for media playing are disclosed, which can achieve the separation of the processing associated with users' personalized demands from the decoding and the playing of media data. The device includes a media proxy service module and a playing module, and the media proxy service module and the playing module are located in a same terminal or the different terminals, wherein, the media proxy service module is configured to: obtain media data according to a received playing command, pre-process the media data, and send a playing control command to the playing module, and send the pre-processed media data to the playing module, according to a request of the playing module; and the playing module is configured to request the media proxy service module for the media data according to the playing control command sent from the media proxy service module, decode the media data to play. The present application has achieved the complete separation of the personalized development from the platform dependency for media playing, and may conveniently and fast integrate with a third party player to realize the media playing function with complex logic.

## Description

### Technical Field

The present invention relates to the multimedia technical field, and more especially, to a method and a device for media playing.

### Background of the Related Art

With the development of the Internet and digital multimedia technology, the multimedia applications, such as Internet Protocol Television (IPTV), Mobile Television(MTV),video meeting, distance education, video surveillance, etc, are stepped into the people's life at a rapid pace, and play an increasingly important role. Statistically, a video accounts for 50% of the internet contents currently, and will become 91% by 2015.While a video player is extremely important software for a multimedia application terminal, and may be widely used in the terminals, such as a PC, a cellphone, and a set top box.

For current media player, in generally, the existing set top box, handheld terminal for the media playing will take two modes. Mode1: it is to integrate with a Software Development Kit (SDK) Application Programming Interface (API) of a chip manufacturer, receive media data from a media data source via the internet, a cable television network, or a satellite receiver, and after the received data is processed by the corresponding traffic logic and data pre-processing, invoke the SDK API to decode and play; Mode2: it is to directly invoke the chip manufacturer's own SDK player, and play the media data obtained from the media data source, but typically these players only have the general characteristics for media playing, but may not satisfy the personalized demands associated with the users. This mode is more commonly applied to the handheld terminal, such as a general smart phone. However, above described modes have the following disadvantages:
Mode 1: it may not separate the SDK API from the media playing, since SDK API provided by each type of the chip is different, so the media playing under this mode may not be associated with a chip platform. Therefore, once a type of the chip is integrated, media playing codes will be modified, and the cross platform capability is relatively poor. Currently, most of the set top box and the player of high-lever cellphone adopt this mode, in which media playing blinds with the SDK API.
Mode2: Typically, the player provided by the chip manufacturer only has general characteristics for media playing, and may not satisfy the variety of the users' demands.

In conclusion, the dependency of the platform and the variety of users' demands are not be fully considered in the method and the system for media playing described above, therefore, there is a need to improve.

### Summary of the Invention

The technical problem of the present invention to be solved is to provide a method and a device for media playing, which can realize the separation of processing associated with personalized demands of user from decoding and playing of media data.

To solve the above technical problem, the present invention provides a device for media playing, which comprises a media proxy service module and a playing module, and the media proxy service module and the playing module are located in a same terminal or different terminals, wherein:
the media proxy service module is configured to: obtain media data according to a received playing command, pre-process the media data, and send a playing control command to the playing module, and send the pre-processed media data to the playing module according to a request of the playing module; and
the playing module is configured to: request the media proxy service module for the media data according to the playing control command sent by the media proxy service module, then decode the media data to play.

Preferably, the media proxy service module comprises: a traffic logic and data processing submodule, a data transmission service submodule and a signaling control submodule, wherein:
the traffic logic and data processing submodule is configured to: obtain the media data from a media data source according to the received playing command, pre-process the obtained media data, send the pre-processed media data to the data transmission service submodule, and notify the signaling control submodule to send the playing control command to the playing module;
the data transmission service submodule is configured to: send the pre-processed media data to the playing module according to the request of the playing module; and
the signaling control module is configured to: send the playing control command to the playing module according to the notification of the traffic logic and data processing submodule.

Preferably, the pre-processing comprises: traffic logic processing associated with users' demands.

Preferably, the pre-processing further comprises: traffic quality control.

Preferably, the signaling control submodule is further configured to: feed response information and state information of the playing module back to the traffic logic and data processing submodule.

Preferably, the device further comprises a user operating interface module, which is configured to receive the playing command sent by the user, and send the playing command to the media proxy service module.

To solve the above technical problem, the present invention also provides a method for media playing, which comprises:
a media proxy service obtaining media data, according to a received playing command, pre-processing the media data, and sending a playing control command to a playing module;
the playing module requesting the media proxy service module for the media data according to the playing control command sent by the media proxy service module;
the media proxy service module sending the pre-processed media data to the playing module according to the request of the playing module;
the playing module decoding the received media data to play;
the media proxy service module and the playing module are located in a same terminal or the different terminals.

Preferably, the pre-processing comprises: traffic logic processing associated with users' demands.

Preferably, the pre-processing further comprises: traffic quality control.

Preferably, the playing module is further used to: feed response information and state information back to the media proxy service module.

The present application fully considers the independency of the chip platform and the variety of the users' demands, and separates the traffic logic processing associated with the users' demands, and pre-processes the media data obtained from the media source, then sends the pre-processed media data to the media transmission service submodule. Meanwhile, the SDK player is controlled by the way of inter-process communication to obtain the pre-processed media data and decode and play the pre-processed media data through standard network protocols. Therefore, the implementation of the details of the SDK player and the SDK API do not need to be paid more attention, and has the better cross-platform capability; compared with the current mode 2, the present application fully considers about the users' demands, and after pre-processing the data, utilizes the SDK player to play.

### Brief Description of Drawings

FIG.1 is a structural diagram of the device according to the embodiment 1 of the present invention.
FIG.2 is a flowchart of the method according to the embodiment 2 of the present invention.
FIG.3 is a block diagram of the system for media playing based on proxy service.

### Preferred Embodiments of the Invention

The embodiments of the invention are described below with reference to the accompanying figures. It is illustrated that, the embodiments and the characteristics of the embodiments in the application can be combined with each other arbitrarily in the case of no collision.

### Embodiment 1

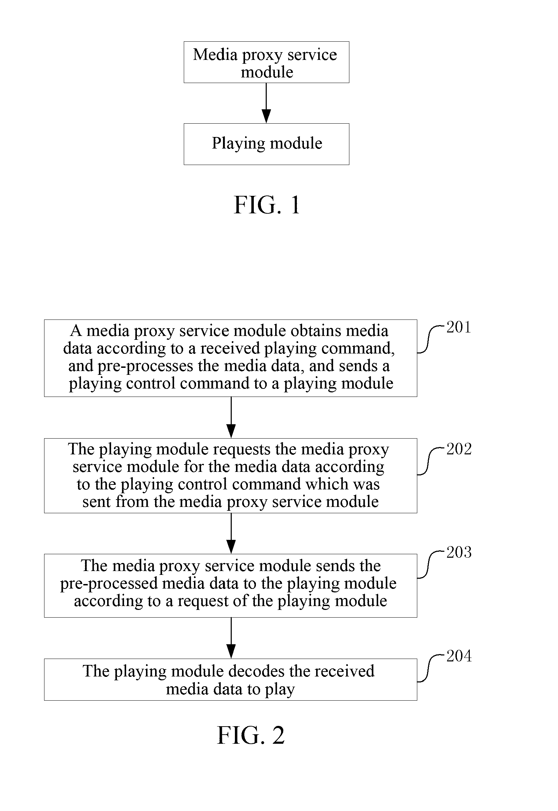

As shown in FIG.1, the embodiment will introduce a device for media playing, the device comprises a media proxy service module and a playing module, and the media proxy service module and the playing module are located in a same terminal or different terminals, wherein:
the media proxy service module is used to obtain media data according to a received playing command, pre-process the media data, and send a playing control command to the playing module, and used to send the pre-processed media data to the playing module according to a request of the playing module; and
the playing module is used to request the media proxy service module for the media data according to the playing control command which was sent from the media proxy service module, then decode the media data to play.

Preferably, the media proxy service module comprises: a traffic logic and data processing submodule, a data transmission service submodule and a signaling control submodule, wherein:
the traffic logic and data processing submodule is used to obtain the media data from a media data source according to the received playing command, pre-process the obtained media data, send the pre-processed media data to the data transmission service submodule, and notify the signaling control submodule to send the playing control command to the playing module;
the data transmission service submodule is used to send the pre-processed media data to the playing module according to the request of playing module; and
the signaling control module is used to send the playing control command to the playing module according to a notification of the traffic logic and data processing submodule.

The pre-processing described above comprises: the service quality control, and/or the traffic logic processing associated with the users' demands.

Preferably, the signaling control module is also used to feed response information and state information of the playing module back to the traffic logic and data processing submodule.

### Embodiment 2

As shown in FIG.2, the embodiment introduces a method for media playing, which was implemented by the device of the embodiment 1, and comprises:
In Step 201, a media proxy service module obtains media data according to a received playing command, pre-processes the media data, and sends a playing control command to a playing module;
In Step 202, the playing module requests the media proxy service module for the media data according to the playing control command which was sent from the media proxy service module;
In Step 203, the media proxy service module sends the pre-processed media data to the playing module according to a request of the playing module;
In Step 204, the playing module decodes the received media data to play.

The media proxy service module and the playing module described above are located in a same terminal or the different terminals.

Preferably, the playing module is further used to feed response information and state information back to the media proxy service module.

The implementation of the device and the method will be illustrated in detail by way of application examples.

### Application example

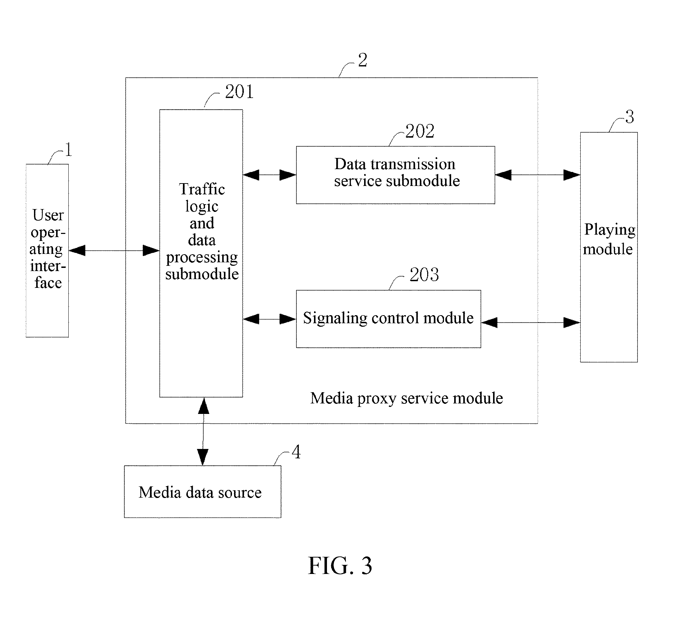

As shown in FIG.3, the system for media playing in the example comprises a user operating interface 1, a media proxy service module 2, a playing module 3, and a media data source 4,wherein:
the user operating interface 1 is used to receive the playing command sent from user;
the playing command sent from user is referred to the command for controlling the operation of playing, e.g. controlling to start playing or stop playing. Besides the user operating interface 1, the playing command, which is sent from user, may be obtained by other ways.

The media proxy service module 2 comprises a traffic logic and data processing submodule 201, a data transmission service submodule 202 and a signaling control submodule 203, where in:
the traffic logic and data processing submodule 201 obtains the media data (the obtained data may be a live bit-stream or an on-demand bit-stream) from a media data source 4, via the internet or the cable television network or the satellite receiver, using the standard flow media protocol, or standard network download protocol, according to the received playing command sent from user operating interface 1; and pre-processes the obtained media data, the processing comprises traffic quality control and traffic logic processing associated with the users' demands, the traffic logic processing associated with the users' demands comprises one or more of the following types of the processing for the users' customized demands: network statistics, DRM (Digital Rights Management (DRM) decryption, Condition Access (CA) descrambling, Forward Error Correction (FEC), Automatic Repeat-reQuest (ARQ) transmission optimization, and the like (Here only part of the traffic logic processing associated with the users' demands is listed); then sends the processed media data to the data transmission service submodule 202, and notifies the signaling control submodule 203 to send the playing control command to the playing module3, the way of notifying may be to send a notification message to the playing module 3, so that the signaling module 203 sends the playing control command to the playing module 3, or also may sends the playing control command to the signaling control submodule 203 directly, the signaling control submodule 203 forwards that playing control command to the playing module 3.

The data transmission service submodule 202 sends the media data that has been pre-processed by the traffic logic and data processing submodule 201, to the playing module 3 after receiving the media playing request from the play module 3; the data transmission service submodule 202 receives the request based on a standard network protocol, and transmits or downloads the media data, for example, supporting the standard protocol used by the playing module 3, e.g. supporting one or more of the following protocols: Real Time Streaming Protocol (RTSP), Real-time Transport Protocol (RTP), RTP Control Protocol (RTCP), Hypertext Transfer Protocol (HTTP), etc.

The signaling control submodule 203 sends the playing control command to the playing module 3 according to the notification of the traffic logic and data processing submodule 201, in addition, the signaling control submodule 203 may be further used to feed the response information and the state information of the playing module back to the signaling control submodule 203; e.g. the response information may comprise whether the playing control command has been executed successfully, and the state information may comprise any of the following states: playing end, playing error, and whether to be in the state of playing, and the like; the fed-back response information and state information is provided to the traffic logic and data processing submodule 201 to carry on the related logic processing (e.g. starting playing, stopping playing, located playing, Fast forward, fast-backward, etc).

The playing module 3 requests the data transmission service submodule 202 for the media data when receiving the playing control command that is sent from the signaling control submodule 203, then obtains the media data from the data transmission service submodule 202, and decodes the obtained media data to play, meanwhile, feeds the its own state information and /or the response information back to the signaling control submodule 203; the playing control command described herein is referred to as a broadcast control command for short, and comprises any of the following commands: playing, pausing, and located playing, etc.

The media data source 4 is used to provide the live stream and the on-demanded stream to the set top box or the handheld terminal.

The above user operating interface 1, the media proxy service module 2, and the playing module 3 are located in the terminal, but the media proxy service module 2 and the playing module 3 may be located in a same terminal, and also may be located in the different terminals, respectively. In one example, the media proxy service module 2 is on the set top box A, and the playing module 3 may be on the set top box B or the handheld terminal. For example, the set top box A is the type of a mature set top box, the set top box B is a set top box prototype developed by the chip manufacturer, the set top box B is controlled by the set top box A, the set top box B's own playing capability and the playing defects can be tested, therefore, the defects of the set top box prototype B can be exposed at an early stage, then the requirements are made to the manufacturer. In another example, there are two set top boxes in a family, a set top box A is played in the drawing room, a set top box B may play the some content which is played by the set top box A in the living room, thereby, it is achieved that the family may view the same content in the different room.

The relationship between the media proxy service module 2 and the playing module 3 is that, the media proxy service module 2 controls the media playing module3, the playing module 3 requests the media proxy service module 2 for the media data after receiving the playing control command from the media proxy service module 2, then decodes the data to play. The playing module is merely responsible for decoding to play, without considering the quality control for a video, the quality control for the network transmission, and the network statistics, e.g. audio and video packet misordering, packet loss processing, and statistics of the delay and jitter during the audio and video transmission, however, all the quality control and data statistics are completed on the media proxy service module 2. It is really achieved the separation of the player module from the traffic processing and the data processing.

Those ordinarily skilled in the art can understand that all or part of steps of the above method may be completed by the programs instructing the relevant hardware, and the abovementioned programs may be stored in a computer-readable storage medium, such as read only memory, magnetic or optical disk. Alternatively, all or part of the steps of the above embodiments may also be implemented by using one or more integrated circuits. Accordingly, each module/unit in the above embodiments may be realized in a form of hardware, or in a form of software function modules. The present invention is not limited to any specific form of the combination of hardware and software.

The present invention can also have a variety of other embodiments, a person skilled in the art, may make the corresponding various modifications and variations according to the present invention without departing from the essence and spirit of the present invention, and all of the modifications and variations shall fall within the appended claims of the present invention.

### Industrial Applicability

Overall, the present application has achieved the complete separation of the personalized development from the platform dependency for media playing, that is, the complete separation of the traffic logic processing for the media data from the decoding and playing of media data, and may conveniently and fast integrate with a third party player to realize the media playing function with complex logic and satisfy the variety of the users' personalized demands. The present application is applicable to the technical fields such as Internet Protocol Television (IPTV), Mobile Television (MTV) and Digital Video Broadcasting(DVB), etc.

## Claims

1. A device for media playing, comprising a media proxy service module and a playing module, wherein the media proxy service module and the playing module are located in a same terminal or different terminals, wherein:
the media proxy service module is configured to: obtain media data according to a received playing command, pre-process the media data, and send a playing control command to the playing module, and send the pre-processed media data to the playing module according to a request of the playing module; and
the playing module is configured to: request the media proxy service module for the media data according to the playing control command sent by the media proxy service module, then decode the media data to play.

2. The device according to claim 1, wherein:
the media proxy service module comprises: a traffic logic and data processing submodule, a data transmission service submodule and a signaling control submodule, wherein:
the traffic logic and data processing submodule is configured to: obtain the media data from a media data source according to the received playing command, pre-process the obtained media data, send the pre-processed media data to the data transmission service submodule, and notify the signaling control submodule to send the playing control command to the playing module;
the data transmission service submodule is configured to: send the pre-processed media data to the playing module according to the request of the playing module;
the signaling control module is configured to: send the playing control command to the playing module according to the notification of the traffic logic and data processing submodule.

3. The device according to claim 1, wherein:
the pre-processing comprises: traffic logic processing associated with users' demands.

4. The device according to claim 1 or 3, wherein:
the pre-processing further comprises: traffic quality control.

5. The device according to claim 2, wherein:
the signaling control module is further configured to: feed response information and state information of the playing module back to the traffic logic and data processing submodule.

6. The device according to claim 1, wherein:
the device further comprises a user operating interface module, which is configured to receive the playing command sent by the user, and send the playing command to the media proxy service module.

7. A method for media playing, comprising:
a media proxy service obtaining media data according to a received playing command, pre-processing the media data, and sending a playing control command to a playing module;
the playing module requesting the media proxy service module for the media data according to the playing control command sent by the media proxy service module;
the media proxy service module sending the pre-processed media data to the playing module according to the request of the playing module;
the playing module decoding the received media data to play;
wherein the media proxy service module and the playing module are located in a same terminal or different terminals.

8. The method according to claim 7, wherein:
the pre-processing comprises: traffic logic processing associated with users' demands.

9. The method according to claim 1 or 7, wherein:
the pre-processing further comprises: traffic quality control.

10. The method according to claim 7, wherein:
the playing module further feed response information and state information back to the media proxy service module.
